# EUROPEAN PATENT APPLICATION

(11) **EP 1 443 445 A1**
(43) Date of publication of application: **04.08.2004**
(21) Application number: 04290205.6
(22) Date of filing: 26.01.2004
(51) Int. Cl.: G06F 17/60, G06F 17/30, H04L 12/24

(54) **Improved method and system for the management of a resource calendar**

(30) Priority: 28.01.2003 FR 0300895
(71) Applicant: ALCATEL, 75008 Paris (FR)
(72) Inventor: Rayrole, Martin, 92320 Chatillon (FR)
(74) Representative: Sciaux, Edmond

(57) **Abrégé**

Un procédé est dédié à la gestion d'un calendrier de ressource(s) présentant une granularité temporelle choisie et couvrant une durée globale choisie, chaque ressource pouvant être partagée en portions de ressource associées chacune à une durée de réservation définie au moins par un instant initial. Ce procédé consiste, d'une part, à mémoriser le calendrier sous la forme d'un arbre dit « n-aire », c'est-à-dire d'ordre n supérieur ou égal à deux, muni de feuilles (Nj4), représentatives chacune d'un intervalle temporel (Tj) égal à la granularité choisie, et de branches partant de noeuds (Nji) correspondant chacun à une période secondaire égale à la somme des intervalles temporels (Tj) représentés par l'ensemble des feuilles qui lui sont rattachées, et d'autre part, à mémoriser dans chaque noeud (Nji) dit primaire, du fait qu'il appartient à un jeu d'un nombre minimal de noeuds représentatifs conjointement d'une durée de réservation, des données représentatives de la quantité maximale de ressource réservée dans la période secondaire correspondante.

## Description

L'invention concerne le domaine de la gestion de ressource(s), et plus particulièrement la gestion d'un calendrier de ressource(s).

Le mot « ressource » doit être ici compris dans sa définition la plus large. L'invention concerne en effet tout type de ressource, qu'il s'agisse de ressources d'un réseau de réservation, comme par exemple des voitures de location, ou bien de ressources d'un réseau de communications, comme par exemple la bande passante, le nombre de connections ou la charge de calcul.

Dans le cas, non limitatif, d'un réseau de communications, il est habituel d'utiliser des outils de gestion de réseau, également appelés NMS (pour « Network Management System »), pour gérer l'allocation de ressources en fonction de requêtes de réservation. Certains de ces outils définissent des calendriers stockant des données représentatives de la disponibilité des ressources du réseau en fonction de la date et de l'heure.

Cependant, en raison de leurs architectures de stockage et du nombre très important de données à stocker, mais surtout à gérer, ces calendriers ne sont adaptés qu'à la réservation de ressource(s) soit de courte durée associée à une granularité fine, soit de longue durée associée à une granularité épaisse. On entend ici par « granularité » le plus petit intervalle temporel de réservation de ressource au sein d'un calendrier.

La situation actuelle n'est donc pas satisfaisante en regard des besoins toujours croissants en matière de réservation de ressource, notamment dans les réseaux de communications.

L'invention a donc pour but d'améliorer la situation actuelle.

Elle propose à cet effet un procédé de gestion d'un calendrier de ressource(s) présentant une granularité temporelle choisie (en fonction des besoins) et couvrant une durée globale choisie (également en fonction des besoins), chaque ressource pouvant être partagée en portions (ou fractions) de ressource associées chacune à une durée de réservation définie au moins par un instant initial.

Ce procédé se caractérise par le fait qu'il consiste :
a) à mémoriser le calendrier sous la forme d'un arbre dit « n-aire », c'est-à-dire d'ordre n supérieur ou égal à deux, muni de « feuilles », représentatives chacune d'un intervalle temporel égal à la granularité choisie, et de « branches » partant de « noeuds » correspondant chacun à une période secondaire égale à la somme des intervalles temporels représentés par l'ensemble des feuilles qui lui sont rattachées, et
b) à mémoriser dans chaque noeud dit primaire, du fait qu'il appartient à un jeu d'un nombre minimal de noeuds représentatifs conjointement d'une durée de réservation, des données représentatives de la quantité maximale de ressource réservée dans la période secondaire correspondante.

On entend ici par « arbre d'ordre n », un arbre binaire, tertiaire, quaternaire, ou plus généralement arbre n-aire, c'est-à-dire de chaque noeud duquel partent n branches vers n noeuds (ou n feuilles terminales) d'un niveau inférieur. Ainsi, dans un arbre binaire, deux (2) branches partent de chaque noeud vers deux noeuds (ou deux feuilles) d'un niveau inférieur.

Avantageusement, en cas de demande de suppression d'une réservation de ressource, les données mémorisées (représentatives des quantités de ressource réservées) peuvent être mises à jour. Par ailleurs, un mécanisme permet de décaler le calendrier dans le temps, au fur et à mesure que le temps s'écoule.

L'invention porte également sur un dispositif de gestion d'un calendrier de ressource(s) comprenant :
- d'une part, une mémoire capable de stocker le calendrier sous la forme d'un arbre n-aire, d'ordre n supérieur ou égal à deux, muni de feuilles, représentatives chacune d'un intervalle temporel égal à la granularité du calendrier, et de branches partant de noeuds correspondant chacun à une période secondaire égale à la somme des intervalles temporels représentés par l'ensemble des feuilles qui lui sont rattachées, et
- d'autre part, des moyens de traitement chargés de déterminer pour chaque noeud primaire (appartenant à un jeu d'un nombre minimal de noeuds représentatifs conjointement d'une durée de réservation) des données représentatives de la quantité maximale de ressource réservée dans la période secondaire correspondante, et d'adresser ces données à la mémoire de sorte qu'elles soient stockées au sein de l'arbre n-aire.

Préférentiellement, les moyens de traitement sont agencés de manière à délivrer, sur requête, des données représentatives de la disponibilité d'une ressource sur une durée choisie, à partir des données de l'arbre n-aire stockées dans la mémoire.

Par ailleurs, en cas de réception d'une requête de suppression d'une réservation de ressource, les moyens de traitement sont préférentiellement agencés de manière à mettre à jour les données représentatives des quantités de ressource réservées, stockées dans la mémoire.

En outre, les moyens de traitement sont préférentiellement agencés de manière à mettre à jour la mémoire, par exemple périodiquement, au fur et à mesure que le temps s'écoule.

L'invention porte en outre sur un terminal de gestion de réseau comprenant au moins un dispositif du type de celui présenté ci-avant.

L'invention est particulièrement bien adaptée à la gestion d'un calendrier de ressource(s) d'un réseau de communications, en particulier lorsque ses ressources sont de type cumulatif, comme par exemple la bande passante, le nombre de connections et la charge de calcul.

D'autres caractéristiques et avantages de l'invention apparaîtront à l'examen de la description détaillée ci-après, et des dessins annexés, sur lesquels :

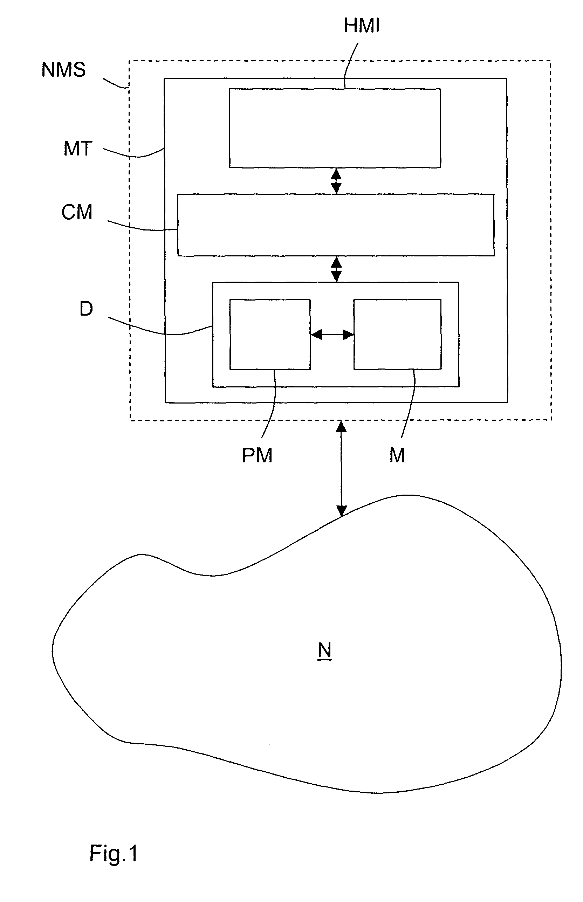

- la figure 1 illustre de façon schématique un exemple de réalisation d'un dispositif selon l'invention, implanté dans un terminal de gestion de réseau de communications,

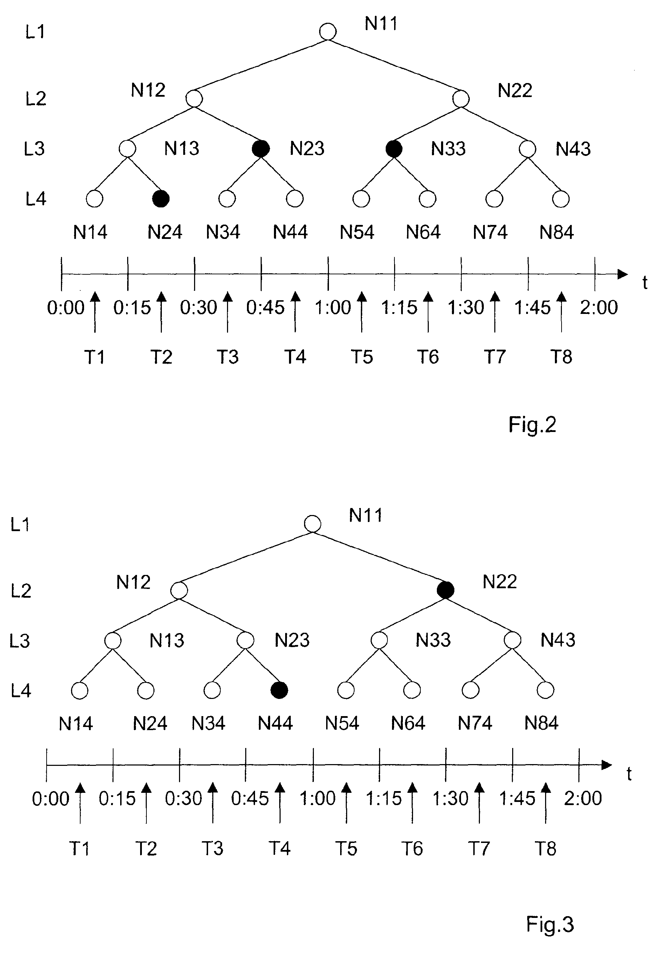

- la figure 2 illustre de façon schématique un calendrier agencé sous la forme d'un arbre binaire dans lequel les noeuds en noir matérialisent des zones de mémoire dans lesquelles sont stockées les données représentant la quantité de ressource réservée dans une durée définie par un premier intervalle [T2-T6], et
- la figure 3 illustre de façon schématique un calendrier agencé sous la forme d'un arbre binaire dans lequel les noeuds en noir matérialisent des zones de mémoire dans lesquelles sont stockées les données représentant la quantité de ressource réservée dans une durée définie par un second intervalle [T4-T8].

Les dessins annexés pourront non seulement servir à compléter l'invention, mais aussi contribuer à sa définition, le cas échéant.

L'invention concerne la gestion d'un calendrier de ressource(s), quel qu'en soit le type. Cependant, on considère dans ce qui suit, à titre illustratif, que les ressources sont celles d'un réseau de radiocommunications, comme par exemple un réseau de type GSM/GPRS ou UMTS. Mais, bien entendu, les ressources pourraient appartenir à d'autres types de réseaux, comme par exemple des réseaux de réservation, notamment de transport.

Un réseau de radiocommunications N, par exemple de type UMTS, comprend généralement, comme illustré sur la figure 1, un système de gestion de réseau, de type NMS (pour « Network Management System »), ici matérialisé par un terminal de gestion MT. Un tel terminal de gestion MT, d'un système NMS, comprend notamment un module de contrôle CM chargé, notamment, de gérer l'allocation des ressources du réseau N en fonction de requêtes de réservation. Le système NMS est en réalité chargé de nombreuses autres fonctions de gestion de réseau qui n'interviennent pas directement dans l'invention, et qui de ce fait n'ont pas besoin d'être décrites ici.

Le module de contrôle CM peut être contrôlé et programmé par un gestionnaire de réseau via une interface homme-machine HMI, par exemple de type GUI (pour « Graphical User Interface »).

Afin de permettre la gestion d'un calendrier de ressource(s) du réseau N, l'invention propose un dispositif de gestion de calendrier D qui, dans l'exemple illustré, est directement couplé au module de contrôle CM du système NMS, mais qui pourrait faire partie dudit module, ou bien être implanté dans un matériel dédié raccordé audit système NMS.

Ce dispositif D comprend tout d'abord une mémoire M dans laquelle se trouvent stockées des données définissant un calendrier de réservation de ressource(s), présentant une granularité temporelle choisie, couvrant une durée globale PT choisie, et agencé sous la forme d'un arbre de type « n-aire », d'ordre n supérieur ou égal à deux.

Une réservation de ressource est toujours associée à une durée de réservation comportant au moins un instant de départ (par exemple la date et l'heure) ainsi qu'éventuellement un instant de fin (si la durée n'est pas infinie).

Un arbre de type n-aire (ou d'ordre n), est un arbre comprenant des noeuds Nji appartenant à des niveaux Li et d'où partent n branches vers n noeuds (ou n feuilles terminales) d'un niveau inférieur. Par exemple, dans un arbre binaire (n=2) deux branches partent de chaque noeud Nji d'un niveau Li vers deux noeuds N(2j-1)(i+1) et N(2j)(i+1) (ou deux feuilles) du niveau inférieur L(i+1).

On considère dans ce qui suit, comme illustré sur les figures 2 et 3, que l'arbre du calendrier est de type binaire (n=2). Mais, bien entendu l'arbre peut être d'un ordre n différent de deux (2) dès lors que n est strictement supérieur à un (1). Il pourra ainsi s'agir par exemple d'un arbre ternaire (n=3) ou quaternaire (n=4).

Il est par ailleurs important de noter qu'un arbre n-aire n'est pas forcément complètement équilibré. Il peut en effet être tronqué au niveau de l'une au moins de ses deux extrémités de gauche et de droite.

En outre, on considère dans ce qui suit que le calendrier ne concerne qu'une ressource, par exemple la bande passante du réseau ou le nombre de connections, ou encore la charge de calcul. Mais, bien entendu, il pourrait en concerner plusieurs (au moins deux).

Une feuille est en quelque sorte un noeud Nji, placé au niveau le plus bas (indice i le plus élevé), et duquel ne part aucune branche. Selon l'invention, chaque feuille représente un intervalle temporel Tj égal à la granularité du calendrier, laquelle peut donc être choisie aussi petite ou aussi grande que désiré, selon les besoins.

Dans l'exemple illustré sur les figures 2 et 3, l'arbre du calendrier contient i=4 niveaux Li. Par conséquent, les feuilles sont ici les noeuds Nj4 (N14 à N84) du niveau L4, qui sont respectivement associés aux intervalles de temps (atomiques) T1 à T8 représentant chacun une granularité de quinze (15) minutes.

Par ailleurs, selon l'invention, chaque noeud Nji correspond à une période secondaire ST égale à la somme des intervalles temporels représentés par l'ensemble des feuilles qui lui sont rattachées. Ainsi, dans l'exemple illustré, au niveau L3, le noeud N13 correspond à la période secondaire ST égale à T1 + T2, le noeud N23 correspond à la période secondaire ST égale à T3 + T4, le noeud N33 correspond à la période secondaire ST égale à T5 + T6, et le noeud N43 correspond à la période secondaire ST égale à T7 + T8. De même, au niveau L2, le noeud N12 correspond à la période secondaire ST égale à T1 + T2 + T3 + T4, et le noeud N22 correspond à la période secondaire ST égale à T5 + T6 + T7 + T8. Enfin, au niveau L1, l'unique noeud N11 correspond à la période secondaire ST égale à T1 + T2 + T3 + T4 + T5 + T6 + T7 + T8, laquelle est égale à la durée globale PT du calendrier.

Le dispositif D comprend en outre un module de traitement PM, couplé à la mémoire M et chargé, d'une part, de déterminer pour chaque noeud Nji, dit primaire, des données représentatives de la quantité maximale de ressource réservée dans la période secondaire ST correspondante, et d'autre part, d'adresser les données ainsi déterminées à la mémoire M afin qu'elles soient stockées au sein de l'arbre n-aire.

Par définition, un noeud est dit primaire s'il appartient à un jeu d'un nombre minimal de noeuds représentatifs conjointement d'une durée de réservation. En d'autres termes, un noeud est dit primaire pour une réservation donnée s'il satisfait aux deux conditions suivantes : i) toutes les feuilles qui en dépendent représentent des intervalles temporels Tj inclus dans la durée de la réservation, et ii) il s'agit du noeud « racine » du premier niveau L1 ou bien au moins une feuille associée au noeud du niveau supérieur au sien représente un intervalle temporel Tj qui n'est pas inclus dans la durée de la réservation.

Par exemple, dans l'arbre illustré sur la figure 2 les noeuds noirs (N24, N23 et N33) représentent ensemble la durée de réservation définie par l'intervalle [T2, T6] (ou en d'autres termes l'intervalle temporel s'étendant entre OH15 et 1 H30). De même, dans l'arbre illustré sur la figure 3 les noeuds noirs (N44 et N22) représentent ensemble la durée de réservation définie par l'intervalle [T4, T8] (ou en d'autres termes l'intervalle temporel s'étendant entre 0H45 et 2H00).

La quantité maximale de ressource réservée, associée à un noeud primaire (et stockée dans la mémoire M sous forme d'une donnée ou d'un ensemble de données), est définie par la somme entre, d'une part, la plus grande quantité de ressource réservée parmi les quantités associées à ses « sous-noeuds » du niveau immédiatement inférieur, et d'autre part, la somme des quantités de ressource réservées dans chacune des réservations pour lesquelles ledit noeud est un noeud primaire. Un noeud est dit sous-noeud d'un autre noeud d'un niveau Li donné lorsqu'il appartient à un niveau inférieur audit niveau Li. Lorsqu'un noeud primaire n'a pas de « sous-noeuds », la quantité maximale de ressource réservée qui lui est associée est la somme des quantités de ressource réservées dans chacune des réservations pour lesquelles ledit noeud est un noeud primaire.

Ainsi, lorsque le module de traitement PM reçoit du système NMS une requête demandant une nouvelle réservation de ressource, il n'a qu'à recalculer les données associées aux noeuds primaires du jeu représentatif de la durée de cette nouvelle réservation, puis les transmettre à la mémoire M, de sorte qu'elles soient mises à jour. Cela simplifie notablement les calculs.

Le module de traitement PM peut également délivrer sur requête (issue du système NMS) des données représentatives de la disponibilité d'une ressource sur une durée choisie. Il lui suffit pour ce faire de déterminer le jeu de noeuds primaires associés à cette durée, puis d'accéder aux données de l'arbre n-aire, stockées dans la mémoire M, pour en extraire les quantités correspondantes.

Le module de traitement PM peut également supprimer sur requête (issue du système NMS) une réservation de ressource. Il lui suffit alors de recalculer les données associées aux noeuds primaires du jeu représentatif de la durée de la réservation à supprimer, puis de les transmettre à la mémoire M, de sorte qu'elles soient mises à jour.

En outre, le module de traitement PM est préférentiellement agencé pour mettre à jour la mémoire M, par exemple périodiquement, au fur et à mesure que le temps s'écoule. Pour ce faire, il doit recalculer les données associées aux noeuds primaires qui étaient associés à la feuille devant être supprimée, puis éventuellement réagencer le calendrier si des noeuds primaires doivent être supprimés ou ajoutés, et enfin transmettre les nouvelles données à la mémoire M.

Cette mise à jour, permettant de décaler le calendrier dans le temps, au fur et à mesure que le temps s'écoule, est préférentiellement effectuée lorsqu'il y a peu de modification des réservations de ressource(s), par exemple pendant la nuit.

Dans un arbre binaire (n=2), le nombre de noeuds primaires appartenant à un jeu, associé à une réservation donnée, est inférieur ou égal à 2.log₂(m), où m est le nombre d'intervalles temporels Tj constituant la durée globale PT du calendrier. D'une manière générale, dans un arbre n-aire, le nombre de noeuds primaires appartenant à un jeu, associé à une réservation donnée, est inférieur ou égal à 2.logₙ(m).

Par ailleurs, dans le cas d'un arbre binaire, d'une première part, la vérification de la disponibilité d'une ressource, ou l'ajout d'une nouvelle réservation, ou encore la suppression d'une réservation, requiert un temps proportionnel à log m, et d'autre part, la mise à jour du calendrier, lorsqu'un intervalle temporel Tj s'est écoulé, requiert un temps proportionnel à R.log m (où R est le nombre de réservations actives).

Grâce à l'invention, le nombre de données de réservation à stocker dans le calendrier-arbre étant notablement réduit, il est donc possible de réaliser des calendriers possédant une longue durée globale PT et des granularités fines. A titre d'exemple indicatif, un calendrier-arbre, destiné à la gestion de la bande passante d'un réseau de communications, et présentant une durée globale égale à une année et une granularité égale à 5 minutes, occupe une place mémoire d'environ 2,5 Mo (mégaoctets).

L'invention offre également un procédé de gestion d'un calendrier de ressource(s) présentant une granularité temporelle choisie et couvrant une durée globale choisie, chaque ressource pouvant être partagée en portions de ressource associées chacune à une durée de réservation définie au moins par un instant initial.

Celui-ci peut être mis en oeuvre à l'aide d'un dispositif D du type de celui présenté ci-avant. Les fonctions et sous-fonctions principales et optionnelles assurées par les étapes de ce procédé étant sensiblement identiques à celles assurées par les différents moyens constituant le dispositif D, seules seront résumées ci-après les étapes mettant en oeuvre les fonctions principales du procédé selon l'invention.

Ce procédé consiste :
a) à mémoriser le calendrier sous la forme d'un arbre dit « n-aire », c'est-à-dire d'ordre n supérieur ou égal à deux, muni de « feuilles », représentatives chacune d'un intervalle temporel égal à la granularité choisie, et de « branches » partant de «noeuds» correspondant chacun à une période secondaire égale à la somme des intervalles temporels représentés par l'ensemble des feuilles qui lui sont rattachées, et
b) à mémoriser dans chaque noeud dit primaire, du fait qu'il appartient à un jeu d'un nombre minimal de noeuds représentatifs conjointement d'une durée de réservation, des données représentatives de la quantité maximale de ressource réservée dans la période secondaire correspondante.

L'invention ne se limite pas aux modes de réalisation de procédé, de dispositif et de terminal de gestion de réseau MT décrits ci-avant, seulement à titre d'exemple, mais elle englobe toutes les variantes que pourra envisager l'homme de l'art dans le cadre des revendications ci-après.

## Revendications

1. Procédé de gestion d'un calendrier de ressource(s) présentant une granularité temporelle choisie et couvrant une durée globale (PT) choisie, chaque ressource pouvant être partagée en portions de ressource associées chacune à une durée de réservation définie au moins par un instant initial, **caractérisé en ce qu'**il consiste :
a) à mémoriser ledit calendrier sous la forme d'un arbre dit « n-aire », d'ordre n supérieur ou égal à deux, muni de feuilles (Nj4), représentatives chacune d'un intervalle temporel (Tj) égal à ladite granularité, et de branches partant de noeuds (Nji) correspondant chacun à une période secondaire (ST) égale à la somme des intervalles temporels (Tj) représentés par l'ensemble des feuilles qui lui sont rattachées, et
b) à mémoriser dans chaque noeud (Nji) dit primaire, appartenant à un jeu d'un nombre minimal de noeuds représentatifs conjointement d'une durée de réservation, des données représentatives de la quantité maximale de ressource réservée dans la période secondaire (ST) correspondante.

2. Procédé selon la revendication 1, **caractérisé en ce que** ledit arbre est de type binaire (n=2).

3. Procédé selon la revendication 1, **caractérisé en ce qu'**en cas de demande de suppression d'une réservation de ressource on met à jour lesdites données mémorisées, représentatives des quantités de ressource réservées.

4. Procédé selon la revendication 1, **caractérisé en ce que** l'on met à jour lesdites données mémorisées au fur et à mesure que le temps s'écoule.

5. Procédé selon la revendication 4, **caractérisé en ce que** ladite mise à jour est effectuée périodiquement.

6. Dispositif (D) de gestion d'un calendrier de ressource(s) présentant une granularité temporelle choisie et couvrant une durée globale (PT) choisie, chaque ressource pouvant être partagée en portions de ressource associées chacune à une durée de réservation définie au moins par un instant initial, **caractérisé en ce qu'**il comprend :
a) une mémoire (M) propre à stocker ledit calendrier sous la forme d'un arbre dit « n-aire », d'ordre n supérieur ou égal à deux, muni de feuilles (Nj4), représentatives chacune d'un intervalle temporel (Tj) égal à ladite granularité, et de branches partant de noeuds (Nji) correspondant chacun à une période secondaire (ST) égale à la somme des intervalles temporels (Tj) représentés par l'ensemble des feuilles qui lui sont rattachées, et
b) des moyens de traitement (PM) agencés pour déterminer pour chaque noeud (Nji) dit primaire, appartenant à un jeu d'un nombre minimal de noeuds représentatifs conjointement d'une durée de réservation, des données représentatives de la quantité maximale de ressource réservée dans la période secondaire (ST) correspondante, et pour adresser lesdites données à ladite mémoire (M) de sorte qu'elles soient stockées au sein dudit arbre n-aire.

7. Dispositif selon la revendication 6, **caractérisé en ce que** ledit arbre est de type binaire (n=2).

8. Dispositif selon la revendication 6, **caractérisé en ce que** lesdits moyens de traitement (PM) sont agencés de manière à délivrer des données représentatives de la disponibilité d'une ressource sur une durée choisie.

9. Dispositif selon la revendication 6, **caractérisé en ce qu'**en cas de demande de suppression d'une réservation de ressource lesdits moyens de traitement (PM) sont agencés pour mettre à jour lesdites données représentatives des quantités de ressource réservées, stockées dans ladite mémoire (M).

10. Dispositif selon la revendication 6, **caractérisé en ce que** lesdits moyens de traitement (PM) sont agencés pour mettre à jour ladite mémoire (M) au fur et à mesure que le temps s'écoule.

11. Dispositif selon la revendication 10, **caractérisé en ce que** lesdits moyens de traitement (PM) sont agencés pour mettre à jour ladite mémoire (M) périodiquement.

12. Terminal de gestion (MT) pour un système de gestion de réseau (NMS), **caractérisé en ce qu'**il comprend un dispositif (D) selon l'une des revendications 6 à 11.
